Europäisches Patentamt

European Patent Office

Office européen des brevets

(11) Publication number: **0 085 499**
**A1**

## (12) EUROPEAN PATENT APPLICATION

(21) Application number: **83300231.4**

(22) Date of filing: **18.01.83**

(51) Int. Cl.³: **A 23 L 1/34**
**A 23 C 21/00**

(30) Priority: **18.01.82 US 340095**
**18.01.82 US 340096**

(43) Date of publication of application:
**10.08.83 Bulletin 83/32**

(84) Designated Contracting States:
**AT BE CH DE FR GB IT LI LU NL SE**

(71) Applicant: **Corning Glass Works**
**Houghton Park**
**Corning, New York, 14831(US)**

(72) Inventor: **Bakal, Abraham Itshak**
**10 Stafford Road**
**Parsippany New Jersey(US)**

(72) Inventor: **Crossmann, Tommy Lee**
**R.D. 2 Box 302**
**Corning New York(US)**

(72) Inventor: **Strayer, George Wesley**
**Route 2**
**Painted Post New York(US)**

(72) Inventor: **O'Leary, Virginia Sawyer**
**2317 Weinmann Way**
**Yardley Pennsylvania(US)**

(74) Representative: **Smith, Sydney et al,**
**Elkington and Fife High Holborn House 52/54 High**
**Holborn**
**London WC1V 6SH(GB)**

(54) Hydrolyzed whey or hydrolyzed whey fraction as an emulsifier, production and use in food dressings.

(57) An emulsifier characterised in that it comprises hydrolyzed whey or a hydrolyzed whey fraction, has a protein content of from 2 to 90 percent on a dry weight basis and had, before hydrolysis, a lactose content of from 5 to 85 percent on a dry weight basis, which lactose is at least 30 percent hydrolyzed is disclosed.

Such an emulsifier is particularly useful in the production of substantially dry food dressing mixes and food dressings.

EP 0 085 499 A1

"HYDROLYZED WHEY OR HYDROLYZED WHEY FRACTION
AS AN EMULSIFIER, PRODUCTION AND
USE IN FOOD DRESSINGS"

This invention relates to hydrolyzed whey or a hydrolyzed whey fraction as an emulsifier, to the production thereof and to the use thereof in food dressings.

As is well known, cheese production results in a by-product called "whey" (sometimes referred to as "whole whey"). Such whey typically contains, per litre, from 6 to 9 g of protein, from 45 to 50 g of lactose, from 6 to 8 g of mineral salts and from 1 to 2 g of fat. Worldwide, the amount of lactose alone available from whey in 1977 totalled almost 3.5 billion tons (approx. $3.6 \times 10^9$ tonnes).

In the past, whey was regarded as a waste product and was discharged into sewers or streams and rivers. Because of increasing concerns over environmental pollution, much of the whey is being processed into a variety of animal and human foods. For example, the development of high performance ultrafilters now permits the separation of whey protein from the whey. Such protein is of exceptional value. For example, a 35 percent concentrate of whey protein may replace non-fat dry milk in many food products, such as baked goods, beverages and frozen desserts.

In addition, with the advent of immobilized enzymes, the lactose contained in whey has taken on a new value. That is, the enzymatic hydrolysis of the lactose in such materials as whey, whey permeate and demineralized whey permeate has become commercially feasible. Moreover, glucose and galactose are much sweeter and more soluble than the lactose from which they are derived. Thus, a hydrolyzed lactose product is a functional sweetener which may be used in the preparation of pastries, milk-based desserts and frozen confections, such as ice cream.

Furthermore, such hydrolyzed lactose product is an efficiently fermentable mixture suitable for use as a fermentation substrate in, for example, the brewing and pharmaceutical industries.

Thus, the use of whey, hydrolyzed whey, a whey fraction, and/or a hydrolyzed whey fraction in one or more food products for human consumption is known. Such materials, however, have not been employed as emulsifiers. Where the food product involves the preparation of an emulsion, typical known emulsifiers have been employed. For example, hydrolyzed whey solids prepared by means of soluble enzymes have been used as sweeteners in ice cream, for example, but only in addition to the normal amounts of conventional emulsifiers.

In general, proteins are known to have emulsifying properties; see, for example, R. D. Waniska et al., J. Agric. Food Chem., 29, 826, (1981), which discusses protein-stabilized emulsions and, in particular, the effects of modification on the emulsifying activity of bovine serum albumin.

Emulsifying properties have been attributed to whey or constituents thereof, although more commonly whey simply has been used as a food ingredient in addition to emulsifiers, as mentioned above. For example, U.S. Patent No. 2,030,965 discloses the use of lipoid-free whey as an emulsifying agent in many different industrial applications. Briefly, the lipoid-free whey is prepared by extracting hygroscopic or non-hygroscopic whey powder with a suitable fat solvent, such as isopropyl alcohol or ether. The resulting material which is substantially lipoid free may be used as an emulsifier for various materials. Thus, such material will emulsify oil and water mixtures consisting of up to 80 percent vegetable or mineral oil. Two examples are presented, an egg product and a brushless shaving cream. In both cases, however, the lipoid-free whey was used in conjunction with other emulsifiers, egg yolk in the first example and stearic acid in the second.

According to U.S. Patent No. 3,560,220, a composition comprising fat, an emulsifier, a water-soluble caseinate and whey may be readily prepared by employing a suitable buffer which apparently unexpectedly aids the reconstitution of such ingredients when they are combined with water and/or milk and/or cream. In such a composition, however, the whey is not being utilized as an emulsifier. Rather emulsification results from the presence of any of a large class of edible emulsifiers, such as propylene glycol monostearate.

U.S. Patent No. 3,666,493 discloses a food composition which is prepared by whipping together (a) a homogenized preparation of fat, protein, sugar and emulsifier which has been acidified with an edible acid or lactic acid producing culture and chilled, with (b) a stabilizer of sugar, starch and milk or corn syrup solids. The first composition typically is composed essentially of an edible fat or oil, whey, hydrolyzed cereal solids, such as corn syrup solids, a proteinaceous stabilizing agent, such as sodium caseinate, gelatin, an edible acid, such as lactic acid or a means of producing it, colours, flavours, emulsifiers, edible buffering salts, such as sodium citrate, and water. Typical emulsifiers include sorbitan monostearate and polyoxyethylene sorbitan monostearate. Hence, the whey is not being used as an emulsifier.

According to U.S. Patent No. 3,930,056, modified dried whey derived by the molecular sieve fractionation of partially delactosed cheese whey mother liquid enhances flavour in foods and improves binding, flavour enhancement and emulsification in comminuted meat products. The amounts necessary to effect binding, flavour enhancement or emulsification are thought to be approximately the same, i.e. less than 5 percent, by weight. The partially delactosed mother liquid contains about 40 percent solids, which typically contain from 35 to 45 percent lactose, from 20 to 30 percent ash, from 15 to 20 percent protein, 8 percent lactate and 5 percent citrate.

It has unexpectedly been discovered that hydrolyzed whey or hydrolyzed whey fraction possesses very powerful emulsifying. properties which are not present in the unhydrolyzed material.

Accordingly, the present invention provides an emulsion and a method of preparing an emulsion which is substantially stable for at least 24 hours at ambient temperature which consists essentially of mixing under conditions suitable for producing an emulsion appropriate amounts of:

(A) water,

(B) one or more water-incompatible materials, and

(C) an emulsifier consisting essentially of hydrolyzed whey or a hydrolyzed whey fraction, which emulsifier has a protein content of from 2 to 90 percent on a dry weight basis and which had, before hydrolysis, a lactose content of from 5 to 85 percent on a dry weight basis, which lactose is at least 30 percent hydrolyzed.

The present invention also provides an emulsifier which comprises hydrolyzed whey or a hydrolyzed whey fraction, which emulsifier has a protein content of from 2 to 90 percent on a dry weight basis and which had, before hydrolysis, a lactose content of from 5 to 85 percent on a dry weight basis, which lactose is at least 30 percent hydrolyzed.

Use of the emulsifier or hydrolyzed whey or whey fraction is especially beneficial in the preparation of food dressings, where it also permits, in some cases, to reduce or eliminate such conventional ingredients as sweeteners and thickeners.

It may be supplied as a dry food dressing mix, optionally containing one or more flavouring ingredients, from which food dressings may be prepared as and when needed, by adding water and from 2 to 85 percent, by weight, of one or more water-incompatible edible oils, and optionally one or more flavouring and/or acidifying ingredients as needed.

The dressing may be prepared to be, for example, pourable or spoonable dressings, salad dressings and sandwich spreads; one or more thickeners may be added, as required, to obtain a mayonaise-type dressing.

The method for preparing the emulsion, which is substantially stable for at least 24 hours at ambient temperatures consists essentially of mixing under conditions suitable for producing an emulsion appropriate amounts of water, one or more water-incompatible materials and an emulsifier as defined hereinbefore.

As used herein, the term "substantially stable" means that, upon standing, the volume of water which separates is less than 5 percent of the total emulsion volume.

In general, the water-incompatible materials include any material capable of being a component of an aqueous emulsion. Examples of such materials include petroleum-based materials, waxes, fats and oils.

Petroleum-based materials include lubricating oils, such as light machine oil, heavy machine oil, motor oils of various viscosities; white mineral or paraffin oils; paraffin wax; and petrolatum.

Waxes include carnauba wax, ouricuri wax, beeswax, spermaceti and lanolin.

Fats include coconut fat, babassu fat, palm fat, butter, lard and tallow.

Oils include vegetable oils, such as castor oil, olive oil, peanut oil, rape oil, corn oil, sesame oil, cottonseed oil, soybean oil, sunflower oil, safflower oil, hemp oil, linseed oil, tung oil, oiticica oil and the partially and completely hydrogenated derivatives thereof; animal oils, such as lard oil, neat's-foot oil, whale oil and fish oil.

The oils are preferred, with vegetable oils being most preferred.

In general, the water-incompatible edible oils include any edible oil capable of being used in a food dressing. Where the edible oil is to be used in the preparation of a food dressing which requires the preparation of an emulsion, such oil, of course, must be capable of being a component of an aqueous emulsion. Examples of edible oils include palm oil, coconut oil, babassu oil, olive oil, peanut oil, rape oil, corn oil, sesame oil, cottonseed oil, soybean oil, sunflower oil and safflower oil.

The emulsifier consists essentially of hydrolyzed whey or a hydrolyzed whey fraction, which emulsifier has a protein content of from 2 to 90 percent on a dry weight basis and which had, before hydrolysis, a lactose content of from 5 to 85 percent on a dry weight basis, which lactose is at least 30 percent hydrolyzed.

The protein content of the emulsifier is preferably from 8 to 60 percent on a dry weight basis, with from 8 to 20 percent on a dry weight basis being more preferred.

Preferably, the lactose content of the emulsifier before hydrolysis was from 20 to 85 percent on a dry weight basis. More preferably, the lactose content of the emulsifier before hydrolysis was from 60 to 80 percent on a dry weight basis.

The lactose in the emulsifier is preferably at least 40 percent hydrolyzed; more preferably, at least 70 percent of such lactose is hydrolyzed.

In an especially preferred embodiment, the protein content of the emulsifier is from 8 to 60 percent on a dry weight basis and the emulsifier had, before hydrolysis, a lactose content of from 20 to 85 percent on a dry weight basis, which lactose is at least 40 percent hydrolyzed. Most preferably, such lactose is at least 70 percent hydrolyzed.

In another especially preferred embodiment, the protein content of the emulsifier is from 8 to 20 percent on a dry weight basis and the emulsifier had, before hydrolysis, a lactose content of from 60 to 80 percent on a dry weight basis, which lactose is at least 40 percent hydrolyzed, most preferably at least 70 percent hydrolyzed.

As used herein, the term "whey" means whey as obtained from a cheese manufacturing process, i.e. whole whey.

The term "whey fraction" applies to whey which has had one or more constituents either wholly or partially removed. Examples of the more common whey fractions include whey permeate, which is whey from which a substantial amount of protein has been removed, typically by ultrafiltration; demineralized whey, which is whey from which part or all of the mineral (inorganic) salts have been removed; and whey protein concentrate, which is the protein-enriched fraction obtained by ultrafiltration (whey permeate, of course, is the other fraction).

In general, hydrolysis of the whey or whey fraction may be accomplished by any known means. Thus hydrolysis may be carried out by chemical methods or by enzymatic methods which, in the later case, may utilize either soluble or immobilized enzymes. Enzymatic hydrolysis is preferred and the use of immobilized enzymes is most preferred.

Enzymatic hydrolysis, of course, is well known to those skilled in the art. By way of illustration, H.H. Weetall et al., Biotechnol. Bioeng.; 16, 295, (1974), reports the preparation of immobilized lactase and its use in the enzymatic hydrolysis of acid whey. The enzyme, isolated from both fungi and yeast, was immobilized on zirconia-coated porous glass particles. The substrate consisted of either an aqueous lactose solution or acid whey permeate.

Additionally, L. E. Wierzbicki et al., Biotechnol.

Bioeng., 16, 397, (1974), discusses the hydrolysis of lactose in acid whey using lactase immobilized on porous glass particles with emphasis on the preparation and characterization of a reusable catalyst for the production of low-lactose dairy products. Partially purified lactases from Aspergillus niger, Lactobacillus helveticus and Saccharomyces lactis were immobilized on porous glass particles. The substrate consisted of acid whey powder which had been reconstituted in water to the appropriate solids concentration. In some instances, the reconstituted acid whey was deproteinized by heating in a boiling water bath for five minutes.

Moreover, H. H. Weetall et al., Biotechnol. Bioeng., 16, 689, (1974), describes the preparation of immobilized lactase as part of continued studies on the enzymatic hydrolysis of lactose. A fungal lactase was employed, immobilized on zirconia-coated controlled-pore glass and porous titania particles. The resulting immobilized enzyme preparations were used for the hydrolysis of lactose in whole sweet whey, whole acid whey, acid whey ultrafiltrate (permeate) and pure lactose.

An especially useful process for hydrolyzing lactose is disclosed in copending and commonly assigned application Serial Number 269,945, filed June 3, 1981 in the names of Jean-Luc A. Guy Baret and Luc A. Dohan, (corresponding to British Patent Application 81 18240, publication number 2078227.) The process involves heating the whey to a temperature of from 45 to 90°C for at least 15 seconds, centrifuging the heated whey while it is still warm and contacting the centrifuged whey with an immobilized lactase under conditions sufficient to hydrolyze at least a portion of the lactose contained therein into glucose and galactose.

The manner in which the emulsion is prepared is not critical. In general, it is necessary only to mix the components under conditions sufficient to produce an emulsion, which conditions are well known to those skilled in the art.

Moreover, the amounts of the components employed also are not critical, as long as such amounts are appropriate to produce the desired result. It will be appreciated by those skilled in the art that some water-incompatible materials are more readily emulsified than others. In addition, the emulsifying power of the emulsifier is dependent, at least in part, on the protein and lactose contents and the extent of hydrolysis of the lactose. However, based on the present disclosure, one skilled in the art may readily determine the optimum amounts of any given set of components without undue experimentation.

The present invention also provides an emulsifier which comprises hydrolyzed whey or a hydrolyzed whey fraction, which emulsifier has a protein content of from 2 to 90 percent on a dry weight basis and which had, before hydrolysis, a lactose content of from 5 to 85 percent on a dry weight basis, which lactose is at least 30 percent hydrolyzed.

The following illustrative Examples compare the emulsifying power of whey and whey fractions with hydrolyzed whey and hydrolyzed whey fractions, respectively.

In the Examples, all emulsions were prepared by mixing using a Virtis Model 23 Mixer (Virtis Company, Gardiner, New York, U.S.A.), typically for at least 30 seconds.

The Examples employed one or more of the following materials:

Whey

The whey was Dellac spray-dried sweet dairy whey (Deltown Chemurgic Corporation, Yonkers, New York, U.S.A.). The material contained 12 percent, by weight, protein, 8.2 percent, by weight, ash (mineral salts) and 72 percent lactose.

Hydrolyzed Whey

The hydrolyzed whey was supplied by Corning BIOsystems, Corning Glass Works, Corning, New York, U.S.A., as either a spray-dried powder or a syrup containing either 60 or 70 percent, by weight, solids. The spray-dried powder or the syrup solids on a dry weight basis typically contained 12 percent, by weight, protein, 8.5 percent, by weight, ash, 4 percent, by weight, lactose, 29.5 percent, by weight, glucose, and 29.5 percent, by weight, galactose.

Whey Protein Concentrate

This material was a spray-dried powder supplied by Stauffer Chemical Company, Food Ingredients Division, Westport, Connecticut, U.S.A. The powder contained 51.9 percent, by weight, protein, 10.4 percent, by weight, ash and 26.7 percent, by weight, lactose.

Hydrolyzed Whey Protein Concentrate

The hydrolyzed whey protein concentrate was similar to whey protein concentrate, except that either 30 percent or 42 percent of the lactose originally present had been hydrolyzed by soluble lactase.

Demineralized Hydrolyzed Whey

This material was obtained from Corning BIOsystems as a syrup containing from 60 to 65 percent, by weight, solids. On a dry weight basis, the solids contained approximately 7.2 percent protein, 1.8 percent ash, 4 percent lactose, 18.5 percent glucose and 18.5 percent galactose. The lactose originally present was approximately 90 percent hydrolyzed and the extent of demineralization was about 50 percent.

Whey Permeate

The whey permeate also was obtained from Corning BIOsystems, but as a spray-dried powder. The material contained 3.6 percent, by weight, protein, 9 percent, by weight, ash and 84 percent, by weight, lactose.

Hydrolyzed Whey Permeate

The hydrolyzed whey permeate was similar to the whey permeate, except that 19.2 percent of the lactose originally present had been hydrolyzed by soluble lactase.

## Example 1

To evaluate the emulsifying activity of whey, the whey was dispersed in 10 ml of water containing one drop of 1% aqueous methylene blue. Soybean oil, 10 ml, then was added and mixed at high speed. The resulting emulsion was centrifuged at 3400 rpm for five minutes in a Model 42 Safety Angle Centrifuge (Chicago Surgical and Electrical Company, a division of Lab-Line Instruments, Melrose Park, Illinois, U.S.A.). Centrifugation caused the emulsion to break with the formation of an aqueous layer; the methylene blue dissolves preferentially in the oil phase and aids in reading the demarcation line between the aqueous layer and remaining emulsion, if any.

The whey was added in four different amounts which were sufficient to provide a whey solids level in the total mixture of 0.5, 1.0, 2.5 and 5.0 percent, by weight, respectively. Emulsifying activity (EA) was defined as follows:

$$EA = \frac{(total\ volume - aqueous\ layer\ volume)}{total\ volume} \times 100$$

In each case, the emulsifying activity was 50.0, demonstrating that in each case the emulsion separated completely into a water layer and an oil layer.

## Example 2

The procedure of Example 1 was repeated, except that the whey solids were replaced with solids obtained upon spray drying hydrolyzed whey syrup. At the solids levels employed in Example 1, the emulsifying activities were 57.5, 55.5, 54.5 and 53.5, respectively.

## Example 3

The procedure of Example 2 was repeated, except that the solids employed were obtained by freeze drying hydrolyzed whey syrup. The emulsifying activities were 54.5, 54.5, 54.5 and 54.0, respectively.

## Example 4

An emulsion was prepared by mixing at high speed 50 parts, by volume, of soybean oil with 50 parts of hydrolyzed whey syrup. Such emulsion was stable at room temperature for ten days. At the end of this period, one part of the emulsion was simply mixed with nine parts of cold (45°F or 7.2°C) water. A stable oil-in-water emulsion was formed.

The preceding Examples clearly demonstrate the unexpected and superior emulsifying activity of hydrolyzed whey over that of whey, as well as the long-term standing stability of water-in-oil and oil-in-water emulsions prepared with hydrolyzed whey as the emulsifier.

The Examples which follow show the superiority as emulsifiers of hydrolyzed whey and hydrolyzed whey fractions over whey and whey fractions, respectively, when evaluated in terms of oil capacity, standing stability and effect of pH.

## Example 5

To determine oil capacity, 1 g of the test material was suspended in 25 ml of water, giving an initial solids level of about 3.8 percent, by weight. Small increments of soybean oil (1-2 ml or less) were added to the suspension and mixed at high speed. The procedure was repeated until the next addition of oil gave an emulsion which broke when mixing was stopped. The total amount of oil added up to the point where the emulsion broke was defined as the oil capacity, expressed as the volume of oil per weight in g of solids employed. The oil capacities of various test materials are summarized below:

| Test Material | Oil Capacity, ml oil/g test material |
|---|---|
| Whey | 62.5 |
| Hydrolyzed Whey | 67.5 |
| Whey protein concentrate | 60.0 |
| Hydrolyzed whey protein concentrate, 30% lactose hydrolysis | 60.0 |
| Hydrolyzed whey protein concentrate, 42% lactose hydrolysis | 72.5 |
| Whey permeate | 0 |
| Hydrolyzed whey permeate, 19.2% lactose hydrolysis | 0 |
| Demineralized (50%) hydrolyzed whey | 0 |

## Example 6

The procedure of Example 5 was repeated with some of the test materials, except that the amount of test material was increased to 5 g (i.e. an initial solids level of about 16.7 percent, by weight). The results obtained are summarized below.

| Test Material | Oil capacity, ml oil/5 g test material |
|---|---|
| Whey | 78.8 |
| Hydrolyzed whey | 86.3 |
| Whey permeate | 60.0 |
| Hydrolyzed whey permeate | 75.0 |
| Demineralized (50%) hydrolyzed whey | 75.0 |

Examples 5 and 6 clearly show that, at any given solids level, hydrolyzed whey and hydrolyzed whey fractions are not necessarily equivalent with respect to oil capacity. However, at any given solids level, the hydrolyzed whey or hydrolyzed whey fraction is equivalent or superior to whey or the corresponding whey fraction, respectively. Moreover, equivalency at a low solids level gives way to superiority at a higher solids level. Thus, the superiority of hydrolyzed whey and hydrolyzed whey fractions in some cases is concentration dependent.

The same two Examples also illustrate the need for at least 30 percent hydrolysis of the lactose originally present in the hydrolyzed whey or hydrolyzed whey fraction.

## Example 7

The emulsions obtained in the oil capacity studies described in Examples 5 and 6 were allowed to stand for 24 hours at ambient temperature. Any water which separated upon standing was measured after 20 minutes and at the end of the 24-hour period and expressed as a percentage of the total volume. The results are tabulated below.

| Test Material | Time | Initial Solids Level | |
| --- | --- | --- | --- |
| | | 3.8% | 16.7% |
| Whey | 20 min. | 21.8 | 0 |
| | 24 hrs. | 27.7 | 14.8 |
| Hydrolyzed whey | 20 min. | 10.3 | 0 |
| | 24 hrs. | 19.3 | 0 |
| Whey protein concentrate | 20 min. | 0 | - |
| | 24 hrs. | 6.5 | - |
| Hydrolyzed whey protein concentrate, 30% lactose hydrolysis | 20 min. | 0 | - |
| | 24 hrs. | 2.1 | - |
| Hydrolyzed whey protein concentrate, 42% lactose hydrolysis | 20 min. | 0 | - |
| | 24 hrs. | 0 | - |
| Whey permeate | 20 min. | - | 0 |
| | 24 hrs. | - | 5.0 |
| Hydrolyzed whey permeate | 20 min. | - | 0 |
| | 24 hrs. | - | 4.2 |
| Demineralized (50%) hydrolyzed whey | 20 min. | - | 0 |
| | 24 hrs. | - | 0 |

These data clearly indicate that hydrolyzed whey is significantly better than whey with respect to emulsion standing stability. Certain whey fractions, such as whey protein concentrate, may appear to have better emulsion standing stability properties than hydrolyzed whey. Such fractions, however, are significantly less effective than hydrolyzed whey when compared on a protein content basis - in terms of protein content, whey protein concentrate used at an initial solids level of about 3.8 percent is approximately equivalent to hydrolyzed whey used at an initial solids level of about 16.7 percent.

### Example 8

To evaluate the effect of the oil:water ratio on the standing stabilities of emulsions prepared with hydrolyzed whey, 5 g of the hydrolyzed whey was added to 100 g of mixtures of soybean oil and water having various oil:water ratios. Each mixture was emulsified by mixing at high speed and emulsion standing stability as a function of time was evaluated as described in Example 7. The results obtained are summarized below.

|                 | Standing Time |        |         |          |
| --------------- | ------------- | ------ | ------- | -------- |
| Oil:water ratio | 20 min.       | 1 hr.  | 2 hrs.  | 24 hrs.  |
| 1:3             | 0             | 0      | 55.1    | 65.3     |
| 1:1             | 4.3           | 10.3   | 13.4    | 41.1     |
| 1.5:1           | 0.8           | 3.8    | -       | 30.1     |
| 2.3:1           | 0             | 0      | 1.0     | 21.3     |
| 3:1             | 0             | 0      | 0       | 3.9      |

Interestingly, at standing times of an hour or less, emulsion stability exhibits a minimum at an oil:water ratio of about 1:1. Furthermore, at standing times greater than one hour, emulsion stability increases as the oil:water ratio increases. This finding is unexpected since it is normally easier to form emulsions with a low oil content rather than a high oil content.

-16-

0085499

## Example 9

The procedure of Example 8 was repeated, except that an oil:water ratio of 3:1 was employed, the test materials were whey, hydrolyzed whey and demineralized (50%) hydrolyzed whey and the evaluation was made only after 24 hours. The following results were obtained:

| Test Material | Stability |
| --- | --- |
| Whey | 13.9 |
| Hydrolyzed whey | 0 |
| Demineralized (50%) hydrolyzed whey | 0 |

## Example 10

The procedure of Example 6 was repeated, except that the water was replaced with three solutions having pH's of 4.5, 5.5 and 7.0, respectively, and the test materials were limited to whey and hydrolyzed whey. The following results were obtained:

| | Oil Capacity, ml oil/5 g test material | |
| --- | --- | --- |
| pH | Whey | Hydrolyzed Whey |
| 4.5 | 86.3 | 86.3 |
| 5.5 | 78.8 | 85.0 |
| 7.0 | 65.0 | 88.8 |

While the oil capacity of hydrolyzed whey was not affected by pH, at least in the range studied, whey showed a decrease in oil capacity as pH increased. This finding has major implications in the applicability of hydrolyzed whey as an emulsifier in various systems, such as neutral foods and cosmetics.

## Example 11

A combination of 5 g of hydrolyzed whey, 75 ml of peanut oil and 25 ml of water was mixed at high speed and allowed to stand for 24 hours. At the end of this time, water separation was found to be 10 percent when measured as described in Example 8.

## Example 12

The procedure of Example 11 was repeated, except that peanut oil was replaced with mineral oil. This time the water separation was 24 percent.

## Example 13

The procedure of Example 11 was repeated, except that the 75 ml of peanut oil was replaced with 52.5 ml of motor oil. No separation of water from the emulsion was observed after 24 hours.

Examples 10 to 13 illustrate the fact that various water-incompatible materials have varying requirements with respect to the emulsifying power of the emulsifier employed. Obviously, the more difficultly emulsified water-incompatible materials simply require a higher emulsifier solids level to achieve the requisite emulsion standing stability.

## Example 14

Two cold creams were prepared in accordance with the following formulations:

| Ingredient | Formula A[b] | Formula B[b] |
|---|---|---|
| White paraffin wax | 1.25 | 1.25 |
| Petrolatum | 1.50 | 1.50 |
| Glyceryl monostearate[a] | 2.25 | - |
| Liquid petrolatum | 3.00 | 3.00 |
| Water | 10.0 | 9.0 |
| Hydrolyzed whey | - | 1.0 |

[a] An emulsifier
[b] Parts, by weight

In the case of formula A, the first three ingredients were combined, heated and agitated vigorously while adding the water (boiling) thereto. The resulting cream was transferred to jars and allowed to cool. In the case of formula B, the water and hydrolyzed whey were combined, heated and added to the heated mixture of the other three ingredients with vigorous agitation. Again, the resulting cream was transferred.to jars and allowed to cool. The two cold creams were found to possess similar functional properties and were similar in terms of consistency, creaminess and feel.

### Example 15

Two pourable salad dressings were prepared having the following formulations:

| | Compositions[a] | |
|---|---|---|
| Ingredient | Formula A | Formula B |
| Soybean oil | 35.0 | 35.0 |
| Vinegar (50 grain) | 30.0 | 25.0 |
| Water | 13.6 | 15.6 |
| Sugar | 10.0 | - |
| Spices, flavourings | 5.5 | 4.0 |
| Polysorbate 60 and egg yolk[b] | 5.3 | - |
| Xanthan gum[c] | 0.5 | 0.5 |
| Hydrolyzed whey syrup (70% solids) | - | 19.9 |
| Preservative | 0.1 | 0.1 |

[a]percent, by weight
[b]Emulsifiers
[c]A thickener

In each case, the dry ingredients and water-soluble ingredients were added to the water. The resulting aqueous mixture and the oil then were combined and mixed at high speed. In each case, a stable emulsion was obtained. Moreover, both compositions were acceptable in terms of consistency, pourability and taste.

In view of the foregoing, it should be apparent to those skilled in the art that the method and emulsifier disclosed herein should prove useful any time a stable emulsion of one or more water-incompatible materials with water is desired. Two large and significant fields of use clearly are in the areas of food for human comsumption and cosmetics which depend at least in part on the formation of a stable emulsion.

In terms of the two general types of food dressings described herein, there are some general and preferred ranges of both the water-incompatible edible oils and the at least one emulsifier which are useful as guidelines. These ranges are set forth below.

| Type of Food Dressing | Oils[a] | | Emulsifier[a] | |
|---|---|---|---|---|
| | Gen'l | Pref'd | Gen'l | Pref'd |
| Pourable salad dressing | 5-40 | - | 1-35 | - |
| Low calorie pourable salad dressing | 2-15 | 5-15 | 1-50 | - |
| Mayonnaise-type | 30-85 | 65-85 | 1-50 | 1-35 |
| Low calorie mayonnaise-type | 30-45 | - | 1-50 | - |

[a]Each range is approximate. For oils, each range is percent, by weight, and for the emulsifier, each range is percent on a dry weight basis.

## Example 16

A creamy Italian salad dressing was prepared using hydrolyzed whey as the sole emulsifier (Formula B) and compared with a typical conventional creamy Italian salad dressing formulation (Formula A). The compositions of both salad dressings were as follows:

| Ingredient | Formula A, % | Formula B, % |
|---|---|---|
| Soybean oil | 35.0 | 35.0 |
| Vinegar (50 grain) | 30.0 | 25.0 |
| Water | 13.6 | 15.6 |
| Polysorbate 60[a] | 0.3 | - |
| Sugar | 10.0 | - |
| Salt | 2.5 | 1.0 |
| Dehydrated sour cream[b] | 5.0 | - |
| Garlic powder | 1.5 | 1.5 |
| Onion powder | 1.0 | 1.0 |

| Ingredient | Formula A, % | Formula B, % |
|---|---|---|
| White pepper | 0.5 | 0.5 |
| Potassium sorbate | 0.1 | 0.1 |
| Gum Tragacanth | 0.3 | 0.3 |
| Xanthan gum | 0.2 | 0.2 |
| Hydrolyzed whey (70% solids) | - | 18.5 |

[a] An emulsifier

[b] Protein emulsifier and thickener

The two salad dressings were prepared using procedures commonly employed in the preparation of such products, involving emulsion formation and homogenization.

Both dressings were stored for 12 weeks at ambient temperature and at 100°F (37.8°C). No phase separation (emulsion instability) was observed.

The two formulations were evaluated by an expert taste panel. The panel judged Formula B as highly acceptable in mouthfeel, colour and flavour, and preferred it over Formula A, the control. Formula B also was judged "creamier" than Formula A.

### Example 17

Low calorie thousand island salad dressings were prepared in accordance with the procedure of Example 1 and the following compositions:

| Ingredient | Formula A, % | Formula B, % |
|---|---|---|
| Soybean oil | 13.0 | 13.0 |
| Water | 18.66 | 13.2 |
| Tomato paste | 7.0 | 7.0 |
| Spices[a] | 13.2 | 13.2 |
| Salt | 1.2 | - |
| Egg yolk[b] | 2.0 | - |
| Xanthan gum | 0.5 | 0.5 |
| Polysorbate 60[b] | 0.3 | - |
| Propylene glycol alginate | 0.04 | - |

0085499

| Ingredient | Formula A, % | Formula B, % |
|---|---|---|
| Potassium sorbate | 0.1 | 0.1 |
| Sugar | 14.0 | - |
| Vinegar (50 grain) | 30.0 | 28.0 |
| Hydrolyzed whey (70% solids) | - | 25.0 |

[a] Relish, pepper, onion, garlic and mustard.

[b] An emulsifier

Both products were stored as described in Example 1. Again, no phase separation was observed.

The two products were evaluated by a taste panel which judged Formula B as highly acceptable and "creamier" than Formula A, the control.

Example 18

The procedure of Example 1 was repeated, except that the products were French salad dressings and the compositions were as follows:

| Ingredient | Formula A, % | Formula B, % |
|---|---|---|
| Soybean oil | 35.0 | 35.0 |
| Water | 21.76 | 17.85 |
| Vinegar (50 grain) | 24.0 | 20.0 |
| Flavourings[a] | 7.0 | 7.0 |
| Xanthan gum | 0.2 | 0.15 |
| Propylene glycol alginate | 0.04 | - |
| Sugar | 12.0 | - |
| Hydrolyzed whey (70% solids) | - | 20.0 |

[a] Tomato paste, salt, onion and garlic

The products were stable upon storage and were judged highly acceptable by the taste panel.

Example 19

The procedure of Example 1 was repeated, except that low calorie (low oil-containing) salad dressings were prepared in accordance with the following compositions:

| Ingredient | Formula A, % | Formula B, % |
|---|---|---|
| Soybean oil | 5.0 | 5.0 |
| Water | 35.65 | 22.1 |
| Vinegar (50 grain) | 30.0 | 28.0 |
| Flavourings[a] | 9.4 | 9.4 |
| Egg yolk | 3.0 | - |
| Xanthan gum | 0.6 | 0.4 |
| Propylene glycol alginate | 0.05 | - |
| Polysorbate 60 | 0.3 | - |
| Postassium sorbate | 0.1 | 0.1 |
| Hydrolyzed whey (70% solids) | - | 35.0 |
| Sugar | 16.0 | - |

[a]Tomato paste, salt, pepper and garlic.

Again, no phase separation was observed with either formulation. Formula B was judged highly acceptable by the taste panel, while Formula A was judged unacceptable.

Example 20

Using the commonly employed cold process, two spoonable salad dressings were prepared in accordance with the following compositions:

| Ingredient | Formula A, % | Formula B, % |
|---|---|---|
| Soybean oil | 35.0 | 35.0 |
| Egg yolk | 2.0 | - |
| Salt | 2.0 | - |
| Sugar | 10.5 | - |
| Starch | 4.0 | 3.0 |
| Vinegar (50 grain) | 15.0 | 15.0 |
| Spices | 1.0 | 1.0 |
| Water | 28.5 | 9.0 |
| Hydrolyzed whey (60% solids) | - | 37.0 |
| Stabilizer | 2.0 | - |

The products were stored and evaluated as described in Example 1. Both products were stable upon storage and were judged highly acceptable by the taste panel.

## Example 21

The procedure of Example 5 was repeated to prepare two low calorie spoonable salad dressings in accordance with the following compositions:

| Ingredient | Formula A, % | Formula B, % |
|---|---|---|
| Soybean oil | 15.0 | 15.0 |
| Egg yolk | 4.0 | - |
| Salt | 2.0 | - |
| Sugar | 12.0 | - |
| Starch | 5.0 | 3.0 |
| Vinegar (50 grain) | 15.0 | 15.0 |
| Spices | 1.0 | 1.0 |
| Water | 44.0 | 27.0 |
| Stabilizer | 2.0 | - |
| Hydrolyzed whey (60% solids) | - | 37.0 |

## Example 22

Two mayonnaise-like products were prepared in the conventional manner and had the following compositions:

| Ingredient | Formula A, % | Formula B, % |
|---|---|---|
| Soybean oil | 80.0 | 80.0 |
| Egg yolk | 8.0 | - |
| Spices, Flavourings | 1.0 | 1.0 |
| Vinegar (100 grain) | 3.0 | 3.0 |
| Sugar | 2.0 | - |
| Water | 6.0 | - |
| Hydrolyzed whey (60% solids) | - | 16.0 |

The two products were stored and evaluated as described in Example 1. Both products were stable upon storage and were judged acceptable by the expert taste panel.

The definition of the emulsifier is deemed to cover reconstituted hydrolyzed whey products and reconstituted hydrolyzed whey fractions. Additionally, such definition includes synthetic hydrolyzed whey and synthetic hydrolyzed whey fractions, i.e. any composition obtained by combining whey or other protein with appropriate amounts of lactose and/or glucose and galactose whereby such composition meets the requirements of the emulsifier as defined.

CLAIMS:

1.    An emulsifier characterised in that it comprises hydrolyzed whey or a hydrolyzed whey fraction, has a protein content of from 2 to 90 percent on a dry weight basis and had, before hydrolysis, a lactose content of from 5 to 85 percent on a dry weight basis, which lactose is at least 30 percent hydrolyzed.

2.    An emulsifier as claimed in claim 1 wherein the protein content is from 8 to 60 percent on a dry weight basis.

3.    An emulsifier as claimed in claim 1 or claim 2 wherein the protein content is from 8 to 20 percent on a dry weight basis.

4.    An emulsifier as claimed in any of claims 1 to 3 wherein the lactose content before hydrolysis was from 20 to 85 percent on a dry weight basis.

5.    An emulsifier as claimed in claim 4 wherein the lactose content before hydrolysis was from 60 to 80 percent on a dry weight basis.

6.    An emulsifier as claimed in any of claims 1 to 5 wherein the lactose is at least 40 percent hydrolyzed.

7.    An emulsifier as claimed in claim 6 wherein the lactose is at least 70 percent hydrolyzed.

8.    A substantially dry food dressing mix   characterised in that it comprises at least one emulsifier as claimed in any of claims 1 to 7 and one or more flavouring ingredients.

9.    A food dressing characterised in that it comprises:

(A) from 2 to 85 percent, by weight, of one or more water-incompatible edible oils;

(B) from 1 to 50 percent on a dry weight basis of at least one emulsifier as claimed in any of claims 1 to 7;

(C) one or more flavouring ingredients;

(D) one or more acidifying ingredients; and

(E) water.

10. A substantially dry food dressing mix as claimed in claim 8 or a food dressing as claimed in claim 9 wherein one or more thickeners is/are also present.

11. A substantially dry food dressing mix as claimed in claim 8 or claim 10 or a food dressing as claimed in claim 9 or claim 10 wherein at least one additional emuslifier is also present.

12. A method for the production of an emulsion which is stable for at least 24 hours at ambient temperature characterised in that it comprises mixing appropriate amounts of an emulsifier as claimed in any of claims 1 to 7, water and one or more water-incompatible materials.

13. A method as claimed in claim 12 wherein the water-incompatible material(s) is/are selected from oils.

14. A method as claimed in claim 13 wherein the oils are edible oils and the resulting emulsion is a food or a component thereof.

15. A method as claimed in claim 12 wherein the emulsion is a food dressing, a cosmetic or a component thereof.

European Patent
Office

**EUROPEAN SEARCH REPORT**

**0085499**
Application number

EP 83 30 0231

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | CHEMICAL ABSTRACTS, vol. 85, no. 25, 20th December 1976, page 426, no. 191074q, Columbus Ohio (USA); & JP - A - 76 59 080 (GENERAL FOODS CORP.) (22-05-1976) | 1 | A 23 L 1/34<br>A 23 C 21/00 |
| D,A | US-A-2 030 965 (CLICKNER)<br>*Pages 1,2* | 1 | |
| A | US-A-3 892 873 (KOLEN, GOLOSINEC)<br>*Column 3, line 43 to column 4, line 10* | 1 | |
| A | US-A-2 566 477 (ABRAHAMCZIK et al.)<br>*Column 10, example 6* | 1 | TECHNICAL FIELDS SEARCHED (Int. Cl. 3) |
| | | | A 23 L 1/00<br>A 23 C 21/00 |

The present search report has been drawn up for all claims

| Place of search | Date of completion of the search | Examiner |
|---|---|---|
| THE HAGUE | 03-05-1983 | GREEN C.H. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO Form 1503. 03 82